# EUROPEAN PATENT SPECIFICATION

(11) **EP 2 366 609 B1**
(45) Date of publication and mention of the grant of the patent: **03.09.2014**
(21) Application number: 10155150.5
(22) Date of filing: 02.03.2010
(51) Int. Cl.: B62D 33/077, B60R 21/34, B60R 19/56, E05D 7/10, B62D 33/037

(54) **Fixing device for a cladding plate of a vehicle**
Befestigungsvorrichtung für die Seitenverkleidung eines Fahrzeugs
Dispositif de fixation d'une jupe de véhicule

(43) Date of publication of application: 21.09.2011
(73) Proprietor: IVECO MAGIRUS AG, 89079 Ulm (DE)
(72) Inventor: Glass, Oliver, 89077, ULM (DE)
(74) Representative: Borsano, Corrado

(56) References cited:
- EP-A1- 0 619 217
- EP-A2- 1 026 046
- DE-A1- 10 319 440
- JP-A- 8 028 546
- JP-A- 9 030 412
- JP-A- 9 030 413

## Description

The present invention concerns a fixing device for a cladding plate on the undercarriage of a vehicle according to the preamble of claim 1.

The undercarriages of heavy goods vehicles are frequently provided with lateral cladding plates between the axles. These claddings improve the appearance of the vehicle, but serve above all for safety purposes, as they provide underride protection. These lateral cladding plates are detachably suspended to ensure the vehicle undercarriage remains accessible for maintenance and repair purposes.

The plates are often attached by means of suspensions disposed in pairs, each pair comprising a top and bottom suspension. Whilst the cladding plate can be swung away from the vehicle by its lower edge at the bottom suspension, and, in the outwardly pivoted position, can be removed, the top suspension comprises a manual-release lock which secures the plate in the position in which it is pivoted against the vehicle. In the locked position, the cladding plate cannot be swung out and removed, nor can it be released by accident.

Frequently, the cladding plate is simply hooked into the bottom suspension whilst the top suspension comprises a ratchet system in which the upper edge of the plate engages.

This system is relatively simple and inexpensive in its construction, and the cladding plate can be removed without complication. There is a danger, however, that the hook on the bottom suspension can become detached in the event of strong vibrations.

JP030413 and JP9030412 show a coupling formed by a bearing having a C-shaped cross section and an axle having the features of the preamble of claim 1.

Hence the task of the invention is to improve the above-described prior art fixing devices in such a way that the cladding plate is held more securely in the bottom suspension, without rendering the removal of the plate more difficult.

This task is solved according to the invention by means of a fixing device with the features of claim 1.

According to the invention, the bottom suspension comprises a bearing mounted on the vehicle side with a C-shaped cross-section. Lying rotatably inside this bearing there is an axle with different cross-sections in different diameter directions. These cross-sections are dimensioned so that, in a first rotated position representing the position of the cladding plate when pivoted against the vehicle, the axle is held in place in the bearing and cannot therefore be released through the laterally open cross-section of the bearing. In a second rotated position representing the position of the cladding plate when swung away from the vehicle, the cross-section of the axle is small enough to pass through the free lateral opening of the bearing cross-section so that the cladding plate can be removed without problem.

The cladding plate is attached using the same sequence in reverse, starting by orienting the plate so that it can slide with its smaller cross-section into the C-shaped bearing from the side and it is then pivoted against the vehicle until the lock of the top suspension can be closed. In this rotated position, the axle is held securely in the bearing.

The advantage of the construction according to the invention is that the cladding plate cannot accidentally become unhooked from the bottom suspension when the cladding plate is in the position where it is pivoted against the vehicle.

According to the invention, the top suspension comprises an insert which is attached either to the undercarriage on the vehicle side, or to the cladding plate, plus a receiving element for the insert, which is attached to the other component as the case may be, i.e. to the cladding plate or the undercarriage. The insert can be pressed into the receiving element as the cladding plate is pivoted against the vehicle. Insert and receiving element complement each other in their design so that the insert, when pressed into the receiving element, is centred, and can be locked in the receiving element in the centred position. According to a preferred embodiment, the insert may be attached to the undercarriage and the receiving element may be attached to the cladding plate.

According to a preferred embodiment, this receiving element comprises two diverging sheet-metal tongues which widen outwards against the pressing-in direction, and the insert comprises two sheet-metal tongues which converge in the pressing-in direction to rest on the sheet-metal tongues of the receiving element.

In this embodiment, centering is ensured by the sheet-metal tongues on the receiving element and on the insert. When pressed in, the insert is automatically guided into a central position between the diverging sheet-metal tongues on the receiving element, and can be locked therein.

The insert according to the invention comprises at least one further sheet-metal tongue essentiallly horizontal which, during pressing in, runs onto a complementarily disposed sheet-metal tongue on the receiving element.

These sheet-metal tongues can be disposed in such a way that they point towards each other in or contrary to the direction of pressing-in, but are angled in relation to each other in such a way that their tongue surfaces can run up against each other during pressing in.

Further, at least some of the sheet-metal tongues can be provided with buffer elements.

These buffers may be made of rubber or an elastomer. According to a preferred embodiment, the sheet-metal tongues are themselves elastically deformable. According to another preferred embodiment, the lock is formed by spring-loaded lock disposed on the insert and provided to engage in, or behind, a pawl disposed on the receiving element.

The insert of the top suspension and the bearing of the bottom suspension are preferably connected by a rigid carrier and are formed as one piece with this latter. The insert and the bearing can thus be parts of a single component which is fixed on the vehicle side to a corresponding assembly element.

A preferred example of an embodiment of the invention will be explained in more detail below with reference to the enclosed drawings, in which
- Fig. 1: is a perspective view from above into the undercarriage of a heavy goods vehicle fitted with an embodiment of the fixing device for a cladding plate according to the invention;
- Fig. 2: shows the fixing device of Fig. 1 in a partially detached state;
- Fig. 3: is an exploded view of the fixing device according to the invention as shown in Fig. 1 and 2;
- Fig. 4 and 5: are side views of the bottom suspension of the present embodiment of the fixing device according to the invention in different positions; and
- Fig. 6: and 7 are a perspective view and a side view of the top suspension of the present embodiment of the fixing device according to the invention.

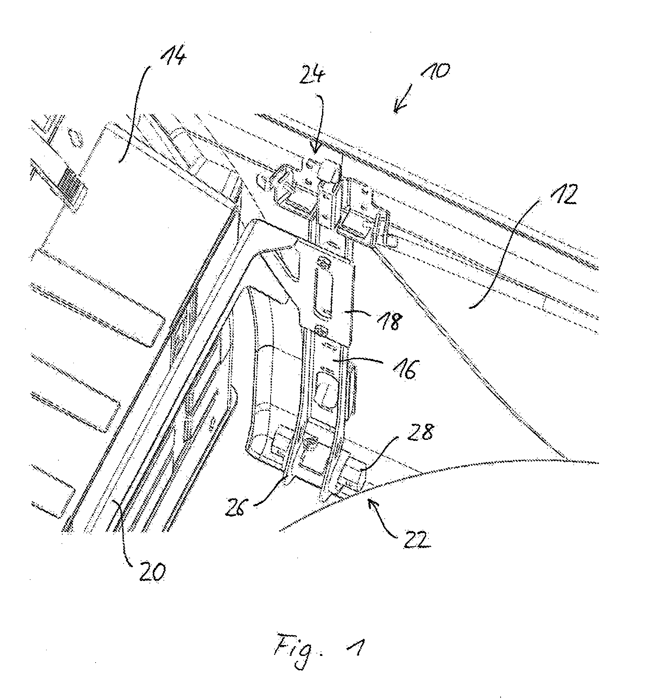

The fixing device 10 shown in Fig. 1 serves to fix a cladding plate 12 to the undercarriage 14 of a heavy goods vehicle, shown only partially in this Figure. Cladding plate 12 serves in particular as lateral cladding for an open space between a front and rear wheel axle of the heavy goods vehicle and functions as an underride protection to prevent other road users from penetrating this space in the event of an accident.

The fixing device 10 comprises a vertical rigid carrier 16, which is flanged at the side to a flange 18 of an assembly element 20, which forms part of undercarriage 14. In detail, this assembly element 20 is a horizontal carrier mounted transversely in undercarriage 14, having a flange 18 at its ends for receiving fixing device 10.

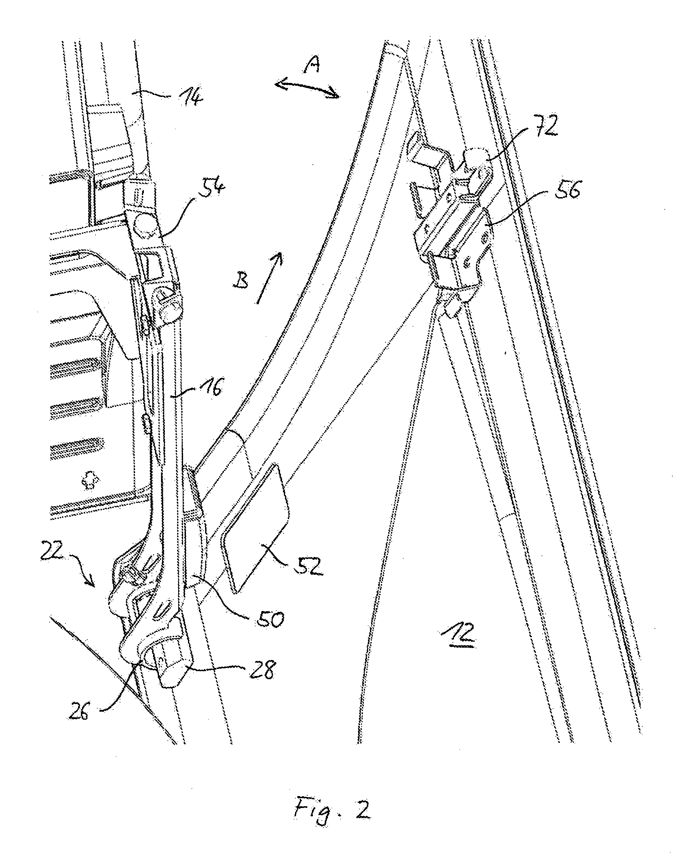

The fixing device 10 itself comprises a bottom suspension 22 and, disposed directly above the latter, a top suspension 24 for releasably fixing cladding plate 12 to undercarriage 14. Bottom suspension 22 comprises a pivot mechanism to allow cladding plate 12 to be pivoted away from the vehicle at bottom suspension 22 when the top suspension 24 is released. In the swung-away position shown in Fig. 2, cladding plate 12 can be removed from bottom suspension 22. Top suspension 24 comprises a manual-release lock which secures cladding plate 12 in the vertical position in which it is pivoted against undercarriage 14. As will be described in more detail in the following, this lock can be actioned by pressing cladding plate 12 against the undercarriage.

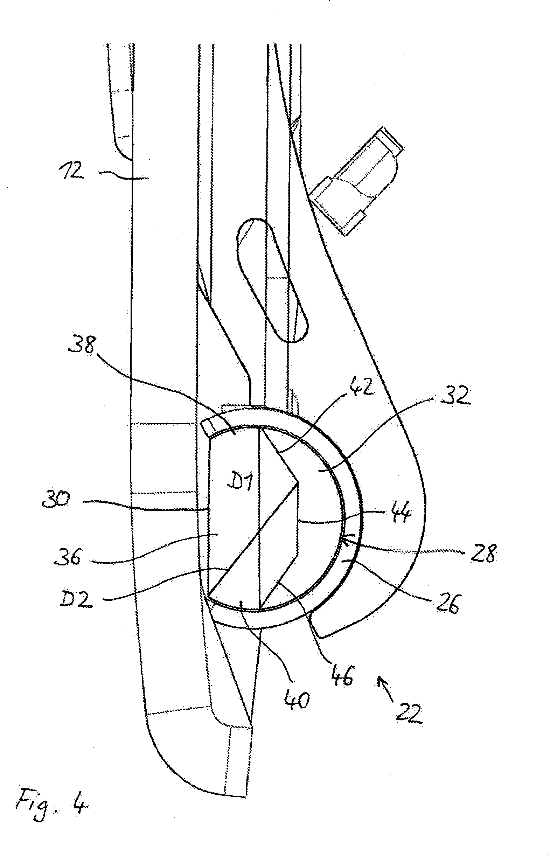

The top suspension 24 and bottom suspension 22 are rigidly attached to the ends of profile carrier 16 and are connected by the latter to undercarriage 14. Details of the structure of bottom suspension 22 will first be described below with reference to Figures 4 to 6.

The bottom suspension 22 comprises a bearing 26, which has a C-shaped cross-section disposed crosswise to the direction of travel of the vehicle and perpendicular to the plane of cladding plate 12. This means bearing 26 forms a cylindrical border which is open on one side of the cylinder sleeve and at the ends of the cylinder. The open side of C-shaped bearing 26 faces cladding plate 12.

Lying rotatably inside bearing 26 there is an axle 28, which is attached to the lower portion of the inside of cladding plate 12, lying flush against the latter. For this purpose, axle 28 is provided on one side with a level surface 30, which is flanged to cladding plate 12. Axle 28 is oriented so that it points in the direction of travel of the vehicle.

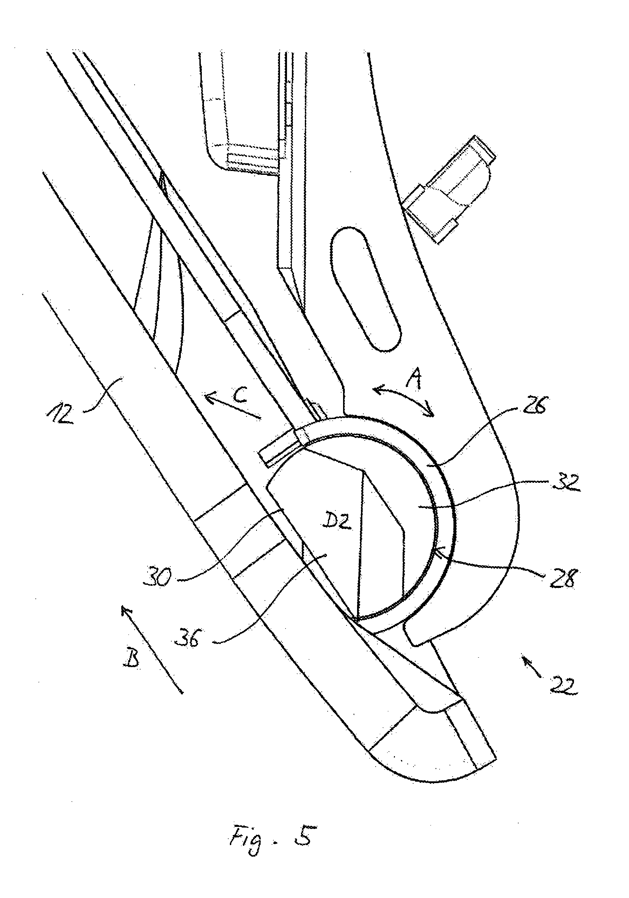

Axle 28 has a central portion 32, whose circumference on the non-level side of axle 28 is adapted to the C-shaped cross-section of bearing 26, i.e. it is shaped on this side like a cylinder sleeve which slides inside bearing 26 as axle 28 rotates. This is shown particularly clearly in the side views in Figures 4 and 5, which show different rotated positions of axle 28 in bearing 26. On both sides of this central portion 32 there are end sections 34, 36 of axle 28, with different cross-sections to that of the previously described central portion 32. On the side facing the cladding plate 12, these end sections 34, 36 have the level surface 30 against which cladding plate 12 rests with its rear side, as well as adjoining circular curves at top and bottom 38, 40 (see Fig. 4), whose outer surfaces are contrived to slide on the inside of bearing 26. On the side furthest removed from cladding plate 12, however, end sections 34, 36 are distanced from the inside of bearing 26 and spring back against the curve of central portion 32. In detail, the cross-section of the end sections of 34, 36 of axle 28 is, on the side furthest from cladding plate 12, formed by surfaces 42, 44, 46 which are angled in relation to each other, of which the upper and lower surfaces 42 and 46 adjoin curves 38,40. Overall, the cross-section of end sections 34, 36 can be described as similar to a hexagon, with the provision that the two cross-section sides 38 and 40 of this hexagon which adjoin level surface 30, are slightly curved.

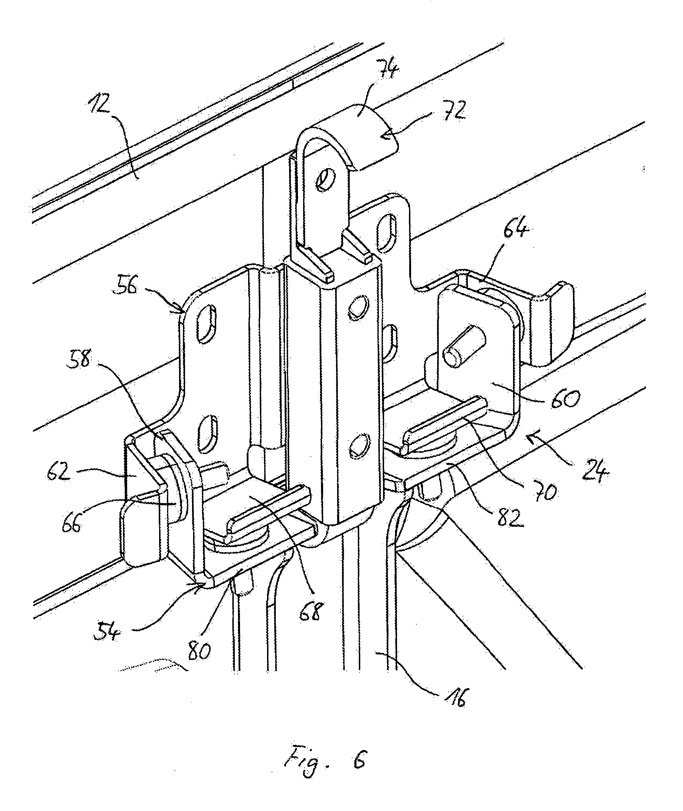

This shape of axle 28 means that in the direction parallel to level surface 30, end sections 34, 36 of axle 28 have a longer cross-section than in any other diameter direction angularly offset in relation to this diameter direction. Whilst the direction of the largest diameter is designated by D1 in Fig. 4, a diameter direction with a shorter cross-section is designated at D2. Diameter D2 extends from a side edge of edge sections 34, 36 connecting rear-side level surface 30 and the lower curved side 40, to an opposite edge for separating two flat sides 42, 44 on the side of end sections 34, 36 furthest from cladding plate 12. Diameter D1 of end sections 34, 36 coincides with the largest inner diameter of C-shaped bearing 26, but is larger than the free side opening of bearing 26 so that axle 28, in the position shown in Fig. 5, cannot be removed from bearing 26 from the side, i.e. perpendicular to diameter direction D1. If axle 28 is rotated inside bearing 26 so that the position shown in Fig. 6 is attained, end sections 34, 36 can pass, thanks to their smaller diameter D2, the free opening of bearing 26 in a direction angularly offset in relation to D1 and can be removed. This situation is also illustrated in Fig. 2.

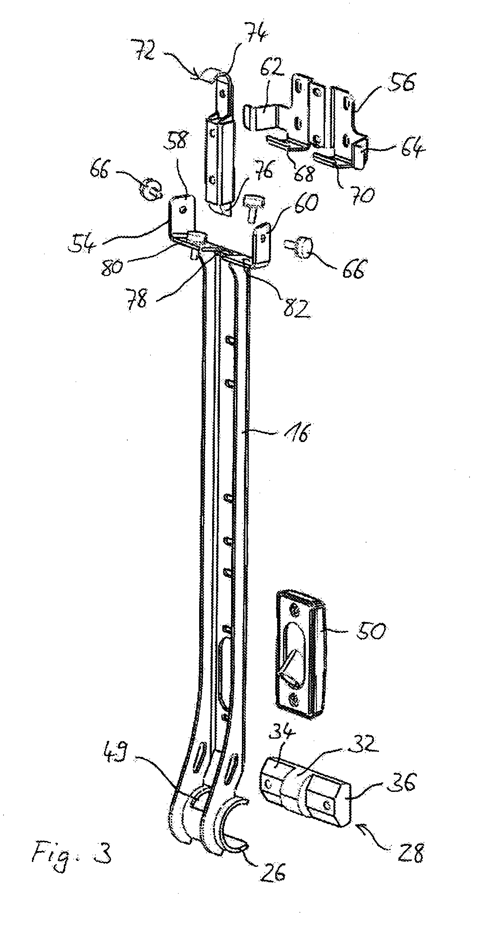

To ensure that in the position shown in Figures 2 and 5, central section 32 does not block the removal motion, bearing 26 is provided on the upper side of the C-shaped border with an opening 49 (see Fig. 3). The curve of central section 32 can slide through this opening during removal as in the situation in Fig. 5.

In Figures 2 and 5, a pivoting movement of cladding plate 12 around axle 28 is indicated by a double-headed arrow A. In the outwardly pivoted position shown in Fig. 2, cladding plate 12 can be removed in the direction of arrow B by removing axle 28 from bearing 26. The movement during removal is also shown in Fig. 5 by arrows B and C. It should also be mentioned that, attached to the side of profile carrier 16 facing cladding plate 12 there is a vehicle light 50, which, when cladding plate 12 is pivoted inwards, inserts itself into a corresponding opening 52, ensuring that it remains visible from the outside of the vehicle even when cladding plate 12 is in position. This light 50 is not important in relation to the present invention.

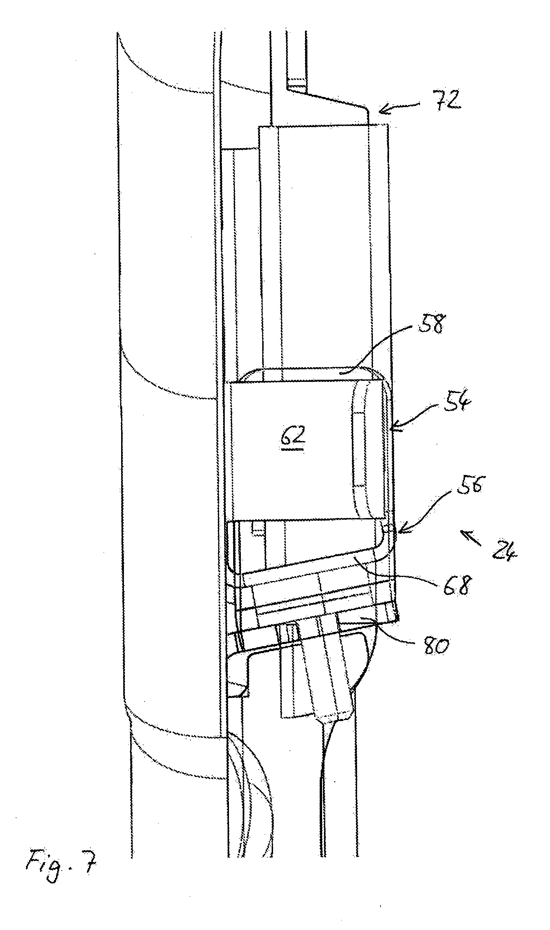

As can been seen in Figures 6 and 7 in particular, the top suspension 24 comprises an insert 54 mounted at the top end of profile carrier 60, which is intended to be inserted into a receiving element 56 mounted on cladding plate 12. Insert 54 and receiving element 56 complement each other in their design so that insert 54, when cladding plate 12 with receiving element 56 is pressed into position, is centred in receiving element 56 and can be locked in this centred position in receiving element 56. In detail, insert 54 is formed from two horizontally distanced sheet- metal tongues 58, 60 which project upwards at the top end of profile carrier 16 and are slightly inclined in relation to each other so that sheet-metal tongues 58, 60 converge in the pressing-in direction, i.e. in the direction of receiving element 56. Receiving element 56 comprises two complementarily disposed sheet-metal tongues 62, 64 which extend from cladding plate 12 and point towards insert 54. Sheet-metal tongues 62, 64 of receiving element 56 diverge slightly contrary to the direction in which insert 54 is inserted into receiving element 56. When cladding plate 12 is pressed into position, sheet-metal tongues 58, 60 of insert 54 rest against sheet-metal tongues 62,64 of receiving element 56, and insert 54 is automatically centred in receiving element 56 due to the inclined position of tongues 58, 60, 62, 64. If, for example, the position of insert 54 deviates slightly to the right in relation to the centred position in receiving element 56, the right tongue 60 of insert 54 slides inwards along the corresponding tongue 64 of receiving element 56 until the centred position is achieved. The same is true if there is any deviation to the left in the position of insert 54 in relation to the centred position; in this case, tongue 58 slides along tongue 62 into the centred position.

To improve the fit of insert 54 in receiving element 56, rubber buffers 66 are disposed on the outside of sheet-metal tongues 58,60. Sheet-metal tongues 58,60,62,64 may be slightly elastic to ensure a play-free fit.

Receiving element 56 further comprises more sheet-metal tongues 68, 70 on its bottom edge which are essentially horizontal, but inclined slightly upwards relative to the horizontal plane. These additional sheet-metal tongues 68, 70, which are disposed approximately between the above-described sheet-metal tongues 62, 64, are intended to run onto corresponding surface areas 80, 82 of the insert 56, which are also positioned at a slight angle and provided on their top surface with buffer elements 66. When cladding plate 12 is pressed into position, tongues 68,70 slide onto surface areas 80, 82 so that a fixed and play-free fit of cladding plate 12 is achieved in relation to the position of suspensions 22 and 24. Corresponding tongues may be provided on insert 54 instead of surface areas 80 and 82. The receiving element 56 itself is formed by an angled sheet-metal element, whilst insert 54 is formed on the top end of profile carrier 16. The positions of insert 54 and receiving element 56 on assembly element 20 or on cladding plate 12 can be exchanged so that receiving element 56 may also be contrived on the top end of profile carrier 16, whilst insert 54 is attached to the inside of cladding plate 12.

Receiving element 56 carries, in a central position, a spring-loaded lock 72, which can be pulled vertically upwards by a hook 74 so that the bottom end 76 of the spring-loaded lock 72 can be pulled upwards. In the pulled-up position, receiving element 56, together with the top part of cladding plate 12, can be pivoted away from insert 54. Conversely, when cladding plate 12 is pressed against profile carrier 16 as insert 54 moves into receiving element 56, the bottom end 76 of the spring-loaded lock 72 slides over a pawl 78 disposed on the top end of profile carrier 16 between surface areas 80, 82 for accommodating tongues 68, 70. Spring-loaded lock 72 then engages behind pawl 78, thereby securing the position of insert 54 in receiving element 56. Cladding plate 12 can therefore be released by simple actioning of spring- loaded lock 72 and subsequent pivoting away and removal.

## Claims

1. Fixing device (10) for a cladding plate (12) on the undercarriage (14) of a vehicle, especially a heavy goods vehicle, with a bottom suspension (22) and, disposed above the latter, a top suspension (24) for releasably attaching cladding plate (12) to undercarriage (14), said cladding plate (12) being pivotable, by the lower suspension (22), away from the vehicle and can be removed in this pivoted-away position, and whose top suspension (24) comprises a manual-release lock, the bottom suspension (22) comprising a bearing (26) attached to undercarriage (14) with a C-shaped cross-section and an axle (28) lying rotatably in the bearing (26), said axle having different transversal cross-sections (D1, D2), in such a way that axle (28) is retained in bearing (26) in a first rotated position, and can be removed from the bearing (26) laterally in a second rotated position:
the top suspension (24) comprising an insert (54) attached to the undercarriage (14) or cladding plate (12), and a receiving element (56) attached to the cladding plate (12) or the undercarriage (14), into which the insert (54) can be pressed, and the insert (54) and the receiving element (56) being complementary in design such that the insert (54) is centred when pressed into the receiving element (56) and can be locked in place in the centred position in the receiving element (56);
**characterized in that**
the insert (54) has at least one essentially horizontal sheet-metal tongue (80, 82) which, during pressing-in, runs onto a complementarily
disposed sheet-metal tongue (68, 70) on receiving element (56).

2. The fixing device of claim 1, **characterised in that** the insert (54) is attached to the undercarriage (14) and the receiving element (56) is attached to the cladding plate (12).

3. The fixing device of claim 1 or 2, **characterised in that** receiving element (56) comprises further two outwardly oriented sheet-metal tongues (62, 64) which diverge against the pressing-in direction, and **in that** the insert (54) comprises two sheet-metal tongues (58, 60) which converge in the pressing-in direction, for resting against the sheet-metal tongues (62, 64) of the receiving element (56).

4. The fixing device of one of claims 1 to 3, **characterised in that** at least some of sheet-metal tongues (62, 64, 68, 70, 80, 82) are provided with elastic buffer elements (66).

5. The fixing device of one of claims 1 to 4, **characterised in that** sheet-metal tongues (62, 64, 68, 70, 80, 82) can be elastically deformed.

6. The fixing device of one of claims 1 to 5, **characterised in that** the locking is provided by a spring-loaded lock (72) disposed on the receiving element (56) and provided to engage in, or behind, a pawl (78) disposed on insert (54).

7. The fixing device of one of claims 1 to 6, **characterised in that** the insert (54) of the top suspension (24) and the bearing (26) of the bottom suspension (22) are connected by a rigid carrier (16) and are formed as one piece with this latter.

## Patentansprüche

1. Befestigungsvorrichtung (10) für eine Verkleidungsplatte (12) an dem Fahrgestell (14) eines Fahrzeugs, insbesondere eines Lastkraftwagens, mit einer unteren Aufhängung (22) und einer über dieser angeordneten oberen Aufhängung (24) zum lösbaren Anbringen einer Verkleidungsplatte (12) an dem Fahrgestell (14), wobei die Verkleidungsplatte (12) durch die untere Aufhängung (22) von dem Fahrzeug weg schwenkbar ist und in dieser weggeschwenkten Position entfernt werden kann, und deren obere Aufhängung (24) eine manuelle Freigabeverriegelung umfasst, wobei die Bodenaufhängung (22) ein Lager (26), das an dem Fahrgestell (14) angebracht ist und einen C-förmigen Querschnitt aufweist, und eine Achse (28) umfasst, die drehend in dem Lager (26) liegt, wobei die Achse verschiedene Querschnitte (D1, D2) auf solche Weise aufweist, dass die Achse (28) in dem Lager (26) in einer ersten gedrehten Position gehalten wird und von dem Lager (26) lateral in der zweiten gedrehten Position entfernt werden kann:
wobei die obere Aufhängung (24) einen Einsatz (54), der an dem Fahrgestell (14) oder der Verkleidungsplatte (12) angebracht ist, sowie ein Aufnahmeelement (56) umfasst, das an der Verkleidungsplatte (12) oder dem Fahrgestell (14) angebracht ist und in welches der Einsatz (54) gepresst werden kann, und wobei der Einsatz (54) und das Aufnahmeelement (56) eine komplementäre Konstruktion aufweisen, so dass der Einsatz (54) zentriert ist, wenn er in das Aufnahmeelement (56) gepresst ist, und in der zentrierten Position in dem Aufnahmeelement (56) an der Stelle verriegelt werden kann;
**dadurch gekennzeichnet, dass**
der Einsatz (54) zumindest eine im wesentlichen horizontale Blechzunge (80, 82) aufweist, die während des Einpressens auf einer komplementär angeordneten Blechzunge (68, 70) an dem Aufnahmeelement (56) läuft.

2. Befestigungsvorrichtung nach Anspruch 1,
**dadurch gekennzeichnet, dass** der Einsatz (54) an dem Fahrgestell (14) angebracht ist und das Aufnahmeelement (56) an der Verkleidungsplatte (12) angebracht ist.

3. Befestigungsvorrichtung nach einem der Ansprüche 1 oder 2,
**dadurch gekennzeichnet, dass** das Aufnahmeelement (56) ferner zwei auswärts orientierte Blechzungen (62, 64) umfasst, die entgegen der Einpressrichtung divergieren, und dass der Einsatz (54) zwei Blechzungen (58, 60) umfasst, die in der Einpressrichtung konvergieren, um an den Blechzungen (62, 64) des Aufnahmeelementes (56) zu liegen.

4. Befestigungsvorrichtung nach einem der Ansprüche 1 bis 3,
**dadurch gekennzeichnet, dass** zumindest einige der Blechzungen (62, 64, 68, 70, 80, 82) mit elastischen Pufferelementen (66) versehen sind.

5. Befestigungsvorrichtung nach einem der Ansprüche 1 bis 4,
**dadurch gekennzeichnet, dass** die Blechzungen (62, 64, 68, 70, 80, 82) elastisch verformt werden können.

6. Befestigungsvorrichtung nach einem der Ansprüche 1 bis 5,
**dadurch gekennzeichnet, dass** die Verriegelung durch eine federbelastete Verriegelung (72) vorgesehen ist, die an dem Aufnahmeelement (56) angeordnet und vorgesehen ist, um mit einer Sperrklinke (78), die an dem Einsatz (54) angeordnet ist, oder hinter dieser in Eingriff zu treten.

7. Befestigungsvorrichtung nach einem der Ansprüche 1 bis 6,
**dadurch gekennzeichnet, dass** der Einsatz (54) der oberen Aufhängung (24) und das Lager (26) der unteren Aufhängung (22) durch einen starren Träger (16) verbunden und einteilig mit diesem geformt sind.

## Revendications

1. Dispositif de fixation (10) d'une jupe (12) sur le châssis (14) d'un véhicule, en particulier d'un véhicule poids lourd, avec une suspension inférieure (22) et, disposée sur celle-ci, une suspension supérieure (24) pour attacher, de manière libérable, la jupe (12) au châssis (14), ladite jupe (12) pouvant être pivotée, par la suspension inférieure (22), à l'écart du véhicule et pouvant être enlevée à cette position écartée atteinte par pivotement, et dont la suspension supérieure (24) comprend un verrou de libération manuelle, la suspension inférieure (22) comprenant un palier (26) attaché au châssis (14) avec une coupe transversale en forme de C et un essieu (28) se trouvant dans le palier (26) de manière à pouvoir tourner, ledit essieu présentant des coupes transversales différentes (D1, D2), de telle manière que l'essieu (28) soit retenu dans le palier (26) à une première position tournée et puisse être enlevé du palier (26) latéralement à une deuxième position tournée ;
la suspension supérieure (24) comprenant un insert (54) attaché au châssis (14) ou à la jupe (12), et un élément de réception (56) attaché à la jupe (12) ou au châssis (14), à l'intérieur duquel l'insert (54) peut être pressé, et l'insert (54) et l'élément de réception (56) étant de conception complémentaire de sorte que l'insert (54) soit centré lorsqu'il est pressé à l'intérieur de l'élément de réception (56) et puisse être verrouillé en place à la position centrée dans l'élément de réception (56) ;
**caractérisé en ce que**
l'insert (54) comporte au moins une langue sensiblement horizontale en tôle métallique (80, 82) qui, au cours de la pression vers l'intérieur, passe sur une langue en tôle métallique disposée de manière complémentaire (68, 70) sur l'élément de réception (56).

2. Dispositif de fixation selon la revendication 1, **caractérisé en ce que** l'insert (54) est attaché au châssis (14) et l'élément de réception (56) est attaché à la jupe (12).

3. Dispositif de fixation selon la revendication 1 ou 2, **caractérisé en ce que** l'élément de réception (56) comprend en outre deux langues en tôle métallique orientées vers l'extérieur (62, 64) qui divergent du sens de pression vers l'intérieur, et **en ce que** l'insert (54) comprend deux langues en tôle métallique (58, 60) qui convergent dans le sens de pression vers l'intérieur, pour reposer contre les langues en tôle métallique (62, 64) de l'élément de réception (56).

4. Dispositif de fixation selon l'une des revendications 1 à 3, **caractérisé en ce qu'**au moins certaines des langues en tôle métallique (62, 64, 68, 70, 80, 82) sont pourvues d'éléments tampons élastiques (66).

5. Dispositif de fixation selon l'une des revendications 1 à 4, **caractérisé en ce que** les langues en tôle métallique (62, 64, 68, 70, 80, 82) peuvent être déformées élastiquement.

6. Dispositif de fixation selon l'une des revendications 1 à 5, **caractérisé en ce que** le verrouillage est fourni par un verrou à ressort (72) disposé sur l'élément de réception (56) et fourni pour venir en prise dans, ou derrière, un cliquet (78) disposé sur l'insert (54).

7. Dispositif de fixation selon l'une des revendications 1 à 6, **caractérisé en ce que** l'insert (54) de la suspension supérieure (24) et le palier (26) de la suspension inférieure (22) sont reliés par un support rigide (16) et sont formés d'un seul tenant avec celui-ci.
